Europäisches Patentamt

European Patent Office

Office européen des brevets

(19)

(11) Veröffentlichungsnummer: **0 008 317**
**B1**

(12) **EUROPÄISCHE PATENTSCHRIFT**

(45) Veröffentlichungstag der Patentschrift: **23.12.81**

(51) Int. Cl.³: **F 16 B 12/20**

(21) Anmeldenummer: **79101201.6**

(22) Anmeldetag: **20.04.79**

(54) **Verbindungsbeschlag.**

(30) Priorität: **22.08.78 DE 2836678**
**12.03.79 DE 2909656**

(43) Veröffentlichungstag der Anmeldung:
**05.03.80 Patentblatt 80/5**

(45) Bekanntmachung des Hinweises auf die Patenterteilung:
**23.12.81 Patentblatt 81/51**

(84) Benannte Vertragsstaaten:
**BE CH FR GB IT NL SE**

(56) Entgegenhaltungen:
**BE - A - 508 737**
**DE - B - 1 176 810**
**FR - A - 2 160 182**
**FR - A - 2 384 145**
**GB - A - 908 346**

**MACHINE DESIGN, Band 50, Nr. 18,**
**10-08-1978,**
**Cleveland, Ohio, USA**

(73) Patentinhaber: **Karl Lautenschläger KG**
**Möbelbeschlagfabrik**
**Egerländer Strasse 2**
**D-6107 Reinheim 1 (DE)**

(72) Erfinder: **Lautenschläger, Karl, jun.**
**Waldstrasse 64**
**D-6107 Reinheim 1 (DE)**

(74) Vertreter: **Helber, Friedrich G., Dipl.-Ing. et al,**
**Giesser Weg 47**
**D-6144 Zwingenberg (DE)**

# 0 008 317

## Verbindungsbeschlag

Die Erfindung betrifft einen Verbindungsbeschlag zum Verbinden von vorzugsweise rechtwinklig zusammentreffenden plattenförmigen Möbelteilen, bestehend aus zwei als im wesentlichen zylindrische Einstecktöpfe ausgebildeten Beschlagteilen, die jeweils versenkt in an einer Flachseite der zu verbindenden Möbelteile offen mündende komplementäre Ausnehmungen einsetz- bzw. einschlagbar sind, und von denen der erste Beschlagteil einen von einer in den Beschlagteil zurückgedrehten Ansetzlage aus in eine aus der Stirnkante des zugehörigen Möbelteile vortretende Verriegelungslage verdrehbaren Drehkeil mit schneckenförmigem Verriegelungskeil aufweist, der von einer über mehr als 180° vom Randbereich eines mit dem Lagerzapfen zur Lagerung im zugehörigen Beschlagteil versehenen scheibenförmigen Basisteils in entgegengesetzte Richtung vorstehenden Randleiste gebildet ist, deren auf gegenüberliegenden Seiten des Basisteils liegende, den Lagerzapfen zugewandte schneckenförmig verlaufende Verriegelungsflächen in bestimmungsgemäßer Verbindungsstellung hinter die Innenflächen von von zwei entgegengesetzten Seitenflächen einer langgestreckten Ausnehmung im zweiten Beschlagteil vorstehenden Riegelvorsprüngen greifen, wobei die den mit dem Drehkeil versehenen ersten Beschlagteil aufnehmende Ausnehmung für den Durchtritt des Drehkeils zu schmalen Stirnkante des zugehörigen Möbelteils hin durchbrochenen und der Beschlagteil an seiner diesem Durchbruch zugeordneten Seite derart abgeflacht ist, daß die für den Durchtritt des Drehkeils offene Abflachung in bestimmungsgemäßer Montagelage etwa bündig zur durchbrochenen Stirnkante des Möbelteils verläuft.

Ein derartiger Verbindungsbeschlag ist im Kurzartikel "Cammed Plugs Speed Furniture Assembly" in der US-Zeitschrift MACHINE DESIGN, Nr. 18, Jahrgang 50 vom 10. August 1978, beschrieben. Der den Drehkeil aufnehmende topfförlmige Beschlagteil dieses Verbindungsbeschlages ist entlang seiner Symmetrieachse geteilt, wobei die Teilungsebene durch die in der Boden- und Deckwand vorgesehenen relativ niedrigen Lageröffnungen verläuft. Da in dieser Teilungsebene auch die über die Lagerzapfen in die Lageröffnungen abgestützte Anzugskraft wirkt, besteht die Gefahr, daß die Lagerzapfen bei starkem Anziehen den Beschlagteil aufweiten und durch den Durchbruch in der Stirnkante des zugeordneten plattenförmigen Möbelteils aus dem Beschlagteil heraustreten. Die mit dem bekannten Verbindungsbeschlag erzeugbaren Anzugskräfte sind daher ebenso wie der Widerstand gegen eine Trennung der miteinander verriegelten Beschlagteile beschränkt.

Bei einem anderen bekannten Verbindungsbeschlag (DE - U - 1 818 201) sind die beiden Beschlagteile flache langgestreckte Kunststoffteile, die in ihrer Querschnittsform entsprechende, in die Stirnkante des einen bzw. die Flachseite des anderen zugehörigen plattenförmigen Möbelteils eingefräste Ausnehmungen eingesetzt und dann mit dem Möbelteil verschraubt werden müssen. Die Herstellung der zur Montage der Beschlagteile erforderlichen langgestreckten Ausnehmungen in den Möbelteilen mit Fingerfräsern ist zeit- und arbeitsaufwendig. Die Montage der Teile kann wegen der erforderlichen Befestigung mit Schrauben auch nicht voll automatisiert werden. Der Verbindungsbeschlag hat sich deshalb in der Praxis nicht einführen können, zumal auch seine Belastbarkeit, d.h. der Widerstand gegen Herausreißen des Drehkeils aus der hinterschnittenen Ausnehmung nicht den gestellten Anforderungen genügt.

Beim weiteren bekannten Verbindungsbeschlag (FR - A - 2 160 182) verbleibt der etwas abweichend ausgebildete Drehkeil auch beim Verriegelungsvorgang mit dem zweiten Beschlagteil vollständig innerhalb des ihn aufnehmenden Beschlagteils. Der zweite Beschlagteil muß deshalb als von dem ihm zugeordneten Möbelteil vorspringender, in den ersten Beschlagteil einführbarer Kopfbolzen ausgeführt werden, dessen Ausreißfestigkeit auch bei Befestigung mittels einer spreizdübelartigen Hülse in einer Bohrung im zugeordneten Möbelteil kritisch ist. Außerdem behindern die vorstehenden Kopfbolzen das Zusammenstellen der demontierten Möbelteile zu platzparenden Transportpaketen.

Demgegenüber liegt der Erfindung die Aufgabe zugrunde, einen Verbindungsbeschlag der hier in Frage stehenden Art zu schaffen, dessen Beschlagteile nicht nur einfach und schnell in den zugeordneten Möbelteil montierbar sind, sondern der vor allem eine wesentlich erhöhte Belastbarkeit hat.

Ausgehend von einem Verbindungsbeschlag der eingangs erwähnten Art wird diese Aufgabe erfindungsgemäß dadurch gelöst, daß der mit dem Drehkeil versehene erste Beschlagteil aus einem Topfteil mit einem Boden und einer bis auf den Bereich der Abflachung zylindrischen Umfangswand und einem in die offene Topfseite eingesetzten Deckelteil zusammengesetzt ist, wobei die Lageraufnahmen für die Lagerzapfen des Drehkeils im Boden und im Deckelteil vorgesehen sind. Der Drehkeil kann also bei abgenommenem Deckelteil in die Lageraufnahme des Topfteils eingesetzt werden, worauf dieser durch Aufsetzen des Deckelteils verschlossen wird. Neben dieser einfachen und schnellen Montage ist diese Unterteilung auch deshalb vorteilhaft, weil — bei Herstellung des Beschlagteils aus Kunststoff — die Spritzgußform für den Topfteil und den Deckelteil relativ einfach aufgebaut und daher preiswert herstellbar sind. Die Lageraufnahmen für die Lagerzapfen des Drehkeils sind einstückig und ununterbrochen im Boden- bzw. Deckelteil eingespritzt. Die beim Aufbau eines Schrankes auf den Drehkeil ausgeübte Anzugskraft wird also nicht im Bereich einer Teilungsebene in den Beschlag eingeleitet, wie dies zum Teil bei bekannten Verbindungsbeschlägen der Fall ist. Im Vergleich zu Verbindungsbeschlägen mit einem derart geteilten Beschlagteil ist der in der erfindungsgemäßen Weise aus einem

2

Topfteil und einem Deckelteil zusammengesetzte erste Beschlagteil also erheblich höher belastbar.

Der erste Beschlagteil wird dabei vorzugsweise so montiert, daß sein Deckelteil im Innern und sein Boden an der Mündung der Ausnehmung des zugehörigen Möbelteils liegt, weil so eine ungewollte Trennung des Deckelteils vom Topfteil ausgeschlossen wird. Es empfiehlt sich dabei, den Boden zumindest in einem Teilbereich über eine Außenfläche der Umfangswand radial etwas vorstehen zu lassen und so einen Tiefenanschlag für das Einpressen oder Einschlagen des Beschlagteils in die Ausnehmung des zugehörigen Möbelteils zu bilden. Selbst wenn die den Beschlagteil aufnehmende Ausnehmung im zugehörigen Möbelteil versehentlich etwas zu tief gebohrt oder gefräst ist, kann hierdurch keine Versetzung des Beschlagteils relativ zum zugehörigen Möbelteil auftreten, weil der Tiefenanschlag beim Einpressen des Beschlagteils in die zugehörige Ausnehmung in der korrekten Lage auf der oberen Flachseite des zugehörigen Möbelteils zur Anlage kommt und dann nicht weiter in die Ausnehmung eingepreßt werden kann.

Der radial vorstehende Bereich des Bodens kann außerdem auf der der Abflachung gegenüberliegenden Seite zu einem großflächigen Auflageflansch vergrößert werden, von dessen dem Möbelteil zugewandter Unterseite mit Abstand von der Umfangswand des Topfteils ein zusätzlich in einer Bohrung im Möbelteil verankerbarer Befestigungszapfen vorspringt. Dadurch wird nicht nur die Belastbarkeit des Beschlagteils erhöht, sondern der zusätzliche Befestigungszapfen gewährleistet auch die korrekte Winkelausrichtung des Beschlagteils derart, daß die abgeflachte Seite des beschlagteils genau bündig im Durchbruch der Ausnehmung des zugehörigen Möbelteils liegt.

Der Deckelteil wird vorzugsweise mit seinem Rand in eine im Bereich des offenen Endes der Umfangswand des Topfteils in deren Innenfläche vorgesehene Umfangsnut bündig eingerastet, wobei er auf der der Abflachung abgewandten Seite zusätzlich wenigstens einen ins Topfinnere vorspringenden Wandabschnitt aufweist, der in eine im Topfinnern gebildete komplementäre Ausnehmung eingreift. Durch den formschlüssigen Eingriff des vorspringenden Wandabschnitts in die komplementäre Ausnehmung in Topfteil wird die Belastbarkeit des Beschlagteils zusätzlich erhöht.

Falls der erste Beschlagteil ohne den vorstehend erwähnten Auflageflansch mit einem zusätzlichen Befestigungszapfen hergestellt wird, kann der Deckelteil auch über ein Filmscharnier einstückig mit dem Topfteil zusammenhängend hergestellt werden.

Um die Ausrichtung der miteinander zu verbindenden Beschlagteile bei der Montage eines Möbelstücks zu erleichtern, kann der Deckelteil im Bereich der Abflachung des den Drehkeil aufnehmenden Beschlagteils einen in Richtung auf den zweiten Beschlagteil vorstehenden Vorsprung aufweisen, und im zweiten Beschlagteil ist dann eine den Vorsprung in der Verbindungsstellung der beiden Beschlagteile aufnehmende komplementäre Ausnehmung vorgesehen.

Da die Belastbarkeit des ersten Beschlagteils auch davon abhängt, daß die Anzugskraft des Drehkeils über möglichst große Lagerflächen auf den Beschlagteil übertragen wird, sind die Lageraufnahmen für den Drehkeil von Bohrungen in vom Boden in Richtung zum Deckelteil und vom Deckelteil in Richtung zum Boden vorspringenden einstückig mit dem Boden bzw. dem Deckelteil hergestellten Ansätzen gebildet, wobei wenigstens die bodenseitige Bohrung den Ansatz und den Boden ganz durchsetzt, so daß die in der bodenseitigen Bohrung liegende, mit einer Werkzeug-Ansetzausnehmung versehene Stirnfläche des Lagerzapfens des Drehkeils zum Ansetzen eines Drehwerkzeugs zugänglich ist. Die mit den Lageraufnahmen versehenen Ansätze springen dabei um ein solches Maß vom Boden bzw. dem Deckelteil vor, daß der zwischen ihnen verbleibende Spalt etwa der Dicke des scheibenförmigen Basisteils des Drehkeils entspricht. Die wirksame Lagerlänge ist also praktisch gleich der Höhe des Beschlagteils vermindert um das sehr geringe Maß der Dicke des scheibenförmigen Basisteils des Drehkeils.

Die Drehachse des Drehkeils wird vorzugsweise derart leicht schräg in der Längsmittelebene des zugehörigen Beschlagteils geneigt angeordnet, daß ihr bodenseitiges Ende größeren Abstand zum zweiten Beschlagteil hat, als ihr deckelseitiges Ende. Dadurch wird beim Verbinden der beiden Beschlagteile ein vorteilhafter schräger Anzug erreicht, und die schräge Lage der Drehachse ermöglicht es, die Klinge des zum Verriegeln des Beschlages dienenden Schraubenziehers ebenfalls schräg anzusetzen, wodurch das Schraubenzierherheft mit so hinreichendem Abstand zum benachbarten Möbelteil steht, daß der Schraubenzieher ohne Schwierigkeiten umgriffen und gedreht werden kann.

In einer vorteilhaften Abwandlung der Erfindung kann die Ausgestaltung auch so getroffen sein, daß der Boden des Topfteils im Innern der Ausnehmung des zugehörigen Möbelteils liegt, während der im Bereich der Mündung der Ausnehmung liegende Deckelteil aus Metall hergestellt ist und zumindest in einem Teilbereich über die Außenfläche der Umfangswand des Topfteils radial vorsteht und so gleichzeitig einen Tiefenanschlag für das Einpressen oder Einschlagen des Einstecktopfs in die Ausnehmung des zugehörigen Möbelteils bildet. Im montierten Zustand ist allein die dekorativ metallisch glänzende oder matte Oberfläche des Deckelteils sichtbar. Da die Lageraufnahme für einen der Lagerzapfen des Drehkeils dann im Deckelteil liegt, können wegen der bei Metallmaterial im Vergleich zu Kunststoff höheren Festigkeit höhere Lagerdrücke zugelassen werden, so daß der Drehkeil also auch höher belastbar bzw. mit höherem Anzugsmoment anziehbar ist.

In einer bevorzugten Weiterbildung dieses Ausführungsbeispiels ist der Deckelteil in eine Umfangsnut in der offenen Seite des Topfteils eingerastet, und zusätzlich weist er einen ins Innere des Topfteils vorspringenden Wandabschnitt auf, der in eine zugeordnete komplementäre Ausnehmung im Top-

**0 008 317**

finnern eingreift. Einerseite ist die Montage des Deckelteils auf dem Topfteil — nach erfolgtem Einlegen des Drehkeils — einfach und schnell automatisch durchführbar, und andererseits wird durch den formschlüssigen Eingriff des vorspringenden Wandabschnitts in die komplementäre Ausnehmung im Topfteil die Belastbarkeit des Beschlagteils gegen in Spannrichtung wirkende Kräfte zusätzlich erhöht.

Der ins Innere des Topfteils vorspringende Wandabschnitt des Deckelteils greift vorzugsweise auf der der Abflachung gegenüberliegenden Seite ins Topfinnere ein.

Der zweite Beschlagteil ist ebenfalls als Einstecktopf mit zur Mündung der Ausnehmung im zugehörigen Möbelteil weisendem Boden und einstückig angesetzter zylindrischer Umfangswand ausgebildet, wobei die mit den Riegelvorsprüngen versehene Ausnehmung im Boden vorgesehen ist. Die Umgangswand des zweiten Beschlagteils wird dabei durch wenigstens zwei, vorzugsweise drei oder mehr zueinander winkelversetzte, gegenüberliegende Bereiche der Innenfläche der Umfangswand diagonal verbindende Stützwände gegen radiale Zusammendrückung versteift.

Die langgestreckte Ausnehmung im Boden des zweiten Beschlagteils, von deren inerer Fläche die vom Drehkeil hintergriffenen Riegelvorsprünge vorspringen, erstreckt sich vorzugsweise nur über einen Teil der Gesamtbreite des Bodens, so daß seitlich neben der Ausnehmung noch stegartige Teile des Bodens bestehen bleiben, welche einer Aufweitung der Ausnehmung im Sinne einer Aufspreizung in Querrichtung ihrer Längserstreckung entgegenwirken.

Schließlich empfiehlt es sich noch, den Boden des zweiten Beschlagteils in dem außerhalb seiner Anlage an der Abflachung des ersten Beschlagteils liegenden Bereich an der Außenseite etwas dicker als im Anlagebereich auszubilden und ihn in diesem Bereich über die Außenfläche der Umfangswand etwas vorstehen zu lassen, so daß auch bei diesem Beschlagteil ein Tiefenanschlag für das Einpressen oder Einschlagen des Beschlagteils in die Ausnehmung des zugehörigen Möbelteils gebildet ist.

Falls ein erster Beschlagteil mit dem vorstehend erwähnten metallischen Deckelteil Verwendung findet, wird die Ausgestaltung zur Anpassung an das Aussehen dieses Beschlagteils dann so getroffen, daß der außerhalb der Anlage der Abflachung des ersten Beschlagteils liegende sichtbare Bereich des Topfteils des zweiten Beschlagteils mit einer metallischen Platte abgedeckt ist, die über Außenfläche der Umfangwand des Topfteils vorspringt und so ebenfalls einen Tiefenanschlag für das Einpressen oder Einschlagen des zweiten Beschlagteils in die Ausnehmung des zugehörigen Möbelteils bildet.

Zweckmäßig weist die metallische Platte an ihrer dem Topfteil des zweiten Beschlagteils zugewandten flaschen Seite wenigstens einen Vorsprung auf, der in eine passende Öffnung im Topfteil einrastbar ist.

Die Randleiste des Drehkeils des ersten Beschlagteils kann an ihrem zu Beginn des Verriegelungsvorgangs zuerst mit den Riegelvorsprüngen des zweiten Beschlagteils in Eingriff kommenden Vorderende eine in ganz zurückgedrehter Ansetzlage von der Abflachung des ersten Beschlagteils noch vorstehende Verlängerung aufweisen, die als Fangabschnitt wirkt und einen zu Beginn des Verriegelungsvorgangs gegebenenfalls noch bestehenden Spalt zwischen den Beschlagteilen überbrückt. Der so ausgebildete Drehkeil kann also auch dann noch wirksam werden, wenn — beispielsweise infolge Verzuges eines der Möbelteile — ein etwas größerer Spalt zwischen den zu ver-riegelnden Beschlagteilen besteht.

Die Ausgestaltung wird dabei zweckmäßigerweise so getroffen, daß die die schraubenförmig verlaufenden Verriegelungsflächen verlängernden, den Lagerzapfen des Drehkeils zugewandten Fangflächen der Verlängerung der Randleiste etwa tangential an die Verriegelungsflächen anschließen.

Um sicherzustellen, daß dieser Fangabschnitt nicht etwa durch versehentliche Manipulation ins Innere des Beschlagteils gedrängt wird und dann die angestrebte Funktion nicht mehr erfüllt, empfiehlt es sich, die Verlängerung an der Anschlußstelle an der den eigentlichen Verriegelungskeil bildenden Randleiste stufenartig auf einen etwas größeren Außendurchmesser zu verdicken, wobei die vom Durchmessersprung gebildete Stufenfläche dann einen in der Ansetzlage des Verbindungsbeschlages am ersten Beschlagteil anliegenden Anschlag bildet, der das erwähnte Zurückdrehen der Verlängerung ins Innere des Beschlagteils verhindert.

Die Erfindung ist in der folgenden Beschreibung mehrerer Ausführungsbeispiele in Verbindung mit der Zeichnung näher erläutert, und zwar zeigt:

Fig. 1 eine perspektivische Ansicht zweier plattenförmiger Möbelteile, die durch ein erstes Ausführungsbeispiel eines erfindungsgemäßen Verbindungsbeschlages miteinander verbunden sind;

Fig. 2 eine Schnittansicht entlang der Linie 2—2 in Fig. 1, wobei der Verbindungsbeschlag jedoch nicht geschnitten, sondern in der Seitenansicht gezeigt ist;

Fig. 3 ebenfalls eine Schnittansicht entlang der Linie 2—2 in Fig. 1, wobei der Verbindungsbeschlag jedoch mitgeschnitten, d.h. im Mittelschnitt dargestellt ist;

Fig. 4 eine Aufsicht auf die Unterseite des in den Figuren 1 bis 3 im waagerechten Möbelteil angeordneten ersten Beschlagteils des erfindungsgemäßen Verbindungsbeschlages;

Fig. 5 eine Draufsicht auf den in den Figuren 1 bis 3 im senkrechten Möbelteil angeordneten zweiten Beschlagteil des erfindungsgemäßen Verbindungsbeschlages;

Fig. 5a eine Schnittansicht des in Fig. 5 gezeigten zweiten Beschlagteils, gesehen in Richtung der Pfeile 5a—5a in Fig. 5;

Fig. 5b eine Schnittansicht durch ein etwas abgewandeltes Ausführungsbeispiel des zweiten Beschlagteils ebenfalls gesehen in Richtung der Pfeile 5a—5a in Fig. 5;

4

Fig. 6 eine in der Schnittführung der Fig. 3 entsprechende Schnittansicht durch den dem in den Figuren 1 bis 3 in waagerechter Lage dargestellten plattenförmigen Möbelteil zugeordneten ersten Beschlagteil eines zweiten Ausführungsbeispiels des erfindungsgemäßen Verbindungsbeschlages;

Fig. 7 eine Draufsicht auf den die Beschlagteile wahlweise verbindenden Drehkeil;

Fig. 8 eine Schnittansicht, gesehen in Richtung der Pfeile 8—8 in Fig. 7;

Fig. 9 einen Längsmittelschnitt durch einen zwei rechtwinklig zusammentreffende plattenförmige Möbelteile lösbar miteinander verbindenden abgewandelten Verbindungsbeschlag gemäß der Erfindung;

Fig. 10 eine Unteransicht des ersten Beschlagteils des Verbindungsbeschlages, gesehen in Richtung des Pfeiles 10 in Fig. 9;

Fig. 11 eine Draufsicht auf den Tropfteil des ersten beschlagteils, gesehen in Richtung des Pfeils 11 in Fig. 9;

Fig. 12 eine in der Blickrichtung der Fig. 10 entsprechende Unteransicht des Deckelteils des in dieser Figur gezeigten ersten Beschlagteils;

Fig. 13 eine Draufsicht auf einen abgewandelten Drehkeil; und

Fig. 14 eine Schnittansicht, gesehen in Richtung der Pfeile 14—14 in Fig. 13.

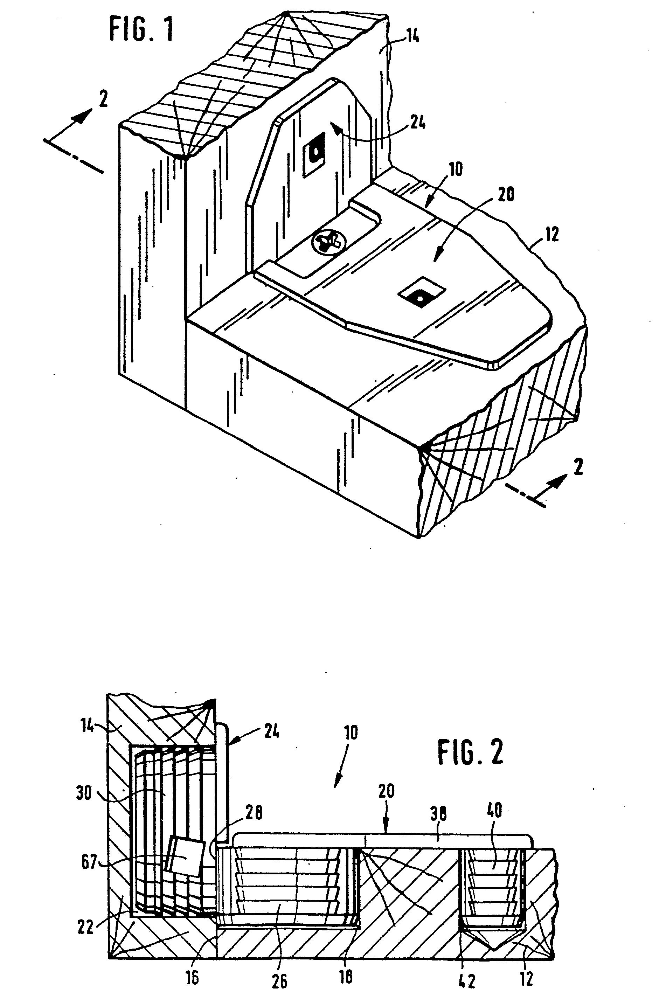

Der in den Figuren 1 bis 3 gezeigte, in seiner Gesamtheit mit 10 bezeichnete erfindungsgemäße Verbindungsbeschlag dient im dargestellten Fall zur Verbindung von zwei rechtwinklig zusammentreffenden plattenförmigen Möbelteilen 12 und 14, diebeispielsweise der Boden und eine Seitenwand eines Schrankes sein mögen. Der Schrankboden 12 ist mit seiner Stirnkante 16 auf einer Flachseite der Seitenwand 14 befestigt, indem ein zumindest teilweise in einer Ausnehmung 18 des Schrankbodens 12 befestigter erster Beschlagteil 20 des Verbindungsbeschlages 10 mit einem ebenfalls weitgehend versenkt in einer Ausnehmung 22 der Seitenwand 14 befestigten zweiten Beschlagteil 24 verspannt wird. Wenn andererseits die Stirnkante der Seitenwand 14 auf der Flachseite des Bodens 12 befestigt werden soll, wird der Beschlagteil 20 der Seitenwand und/der Beschlagteil 24 dem Boden zugeordnet. Die Ausnehmung 18 ist von der Innenseite des Schrankbodens 12 aus mit einem in Querschnitt kreisförmigen Stirnfräser in solcher Nähe der Stirnkante 16 in den Schrankboden eingefräst, daß sie die Stirnkante noch durchbricht, d.h. die Ausnehmung 18 ist an der Stirnkante 16 offen. Der erste Beschlagteil 20 hat in seinem in der Ausnehmung liegenden Bereich die Form eines im wesentlichen zylindrischen Einstecktopfs 26, der jedoch an seiner dem Durchbruch der Ausnehmung 18 zugeordneten Seite bei 28 abgeflacht ist, wobei die Abflachung bündig zur Stirnkante verläuft.

Die Ausnehmung 22 des zweiten Beschlagteils 24 ist in einigem Abstand von der Stirnkante der Seitenwand 14 mit einem im Querschnitt kreisförmigen Stirnfräser in deren Innenseite eingefräst und hat daher einen zylindrischen Querschnitt. Der zweite Beschlagteil 24 ist deshalb in seinem in der Ausnehmung 22 liegenden Bereich ebenfalls als Einstecktopf 30 ausgebildet, dessen weitgehend geschlossener Boden 32 die Mündung der Ausnehmung 22 verschließt, während er zum Boden der Ausnehmung hin offen ist. In dem Teilbereich, in welchem der Boden 32 der Abflachung 28 des ersten Beschlagteils gegenüberliegt, schließt er bündig mit der Innenseite der Seitenwand 14 ab, während er im darüberliegenden Bereich 34 etwas dicker ist, d.h. über die Innenseite der Seitenwand 14 vorsteht und in diesem Bereich über die Außenfläche der Umfangswand des Einstecktopfs 30 radial vorsteht, so daß die der Seitenwand zugekehrte Unterseite des vorstehenden Bereichs einen sich beim Einpressen oder Einschlagen in die Ausnehmung 22 auf der Innenfläche der seitenwand 14 aufsetzenden Tiefenanschlag bildet.

Einen in der Funktion ähnlichen Tiefenanschlag weist auch der Einsteckstopf 26 des ersten Beschlagteile 20 auf, dessen etwa in Höhe der Innenseite des Schrankbodens 12 liegender Boden 36 etwas über die Schrankboden-Innenseite vorsteht und mit Ausnahme des Bereichs der Abflachung 28 zu einem radial vorstehenden Auflageflansch 38 vergrößert ist, dessen Unterseite den erwähnten Tiefenanschlag bildet. Der auf der der Abflachung 28 gegenüberliegenden Seite um ein erhebliches Maß vergrößerte Auflageflansch 38 ist in einigem Abstand vom Einsteckstopf an seiner Unterseite mit einem zusätzlichen Befestigungszapfen 40 versehen, der in eine Bohrung 42 des Schrankbodens 12 eingreift und den Beschlagteil 20 in Längsrichtung ausrichtet und zusätzlich festlegt. Der Befestigungszapfen 40 hat rechtwinklig zur Längsmittelachse des Beschlagteils 20 seitlich vom Zapfenumfang vorspringende im Querschnitt sägerzahnförmige Haltergrate 41, welche nach dem Einschlagen des Beschlagteils 20 in die Wandung der Bohrung 42 eindringen und so eine zusätzliche Sicherung gegen Herausreißen des Befestigungszapfens 40 und damit des Beschlagteils 20 bilden. In Zugrichtung, d.h. in Richtung der Längsmittelachse ist die dem zweiten Beschlagteil 24 zugewandte Umfangswand dagegen glatt, um eine möglichst großflächige Anlage des Zapfens in Beanspruchungsrichtung an der Bohrungswandung zu gewährleisten. Die gegenüberliegende Seite der Umfangswandung des Befestigungszapfens anderseits ist deshalb glatt gehalten, damit keine Verklemmung von vorspringenden Zähen mit einem nächstfolgenden Beschlagteil 20 beim automatischen Züführen zur Montagemaschine auftreten kann.

Die offene Unterseite des Einsteckstopfs 26 ist durch einen eingerasteten Deckelteil 44 verschlossen, der den Einstecktopf 26 gegen radiale Zusammenpressung seiner Umfangswand versteift.

Im bisher beschriebenen Umfang sind die Beschlagteile 20 und 24 im Spritzgußverfahren aus Kunststoff gefertigt.

5

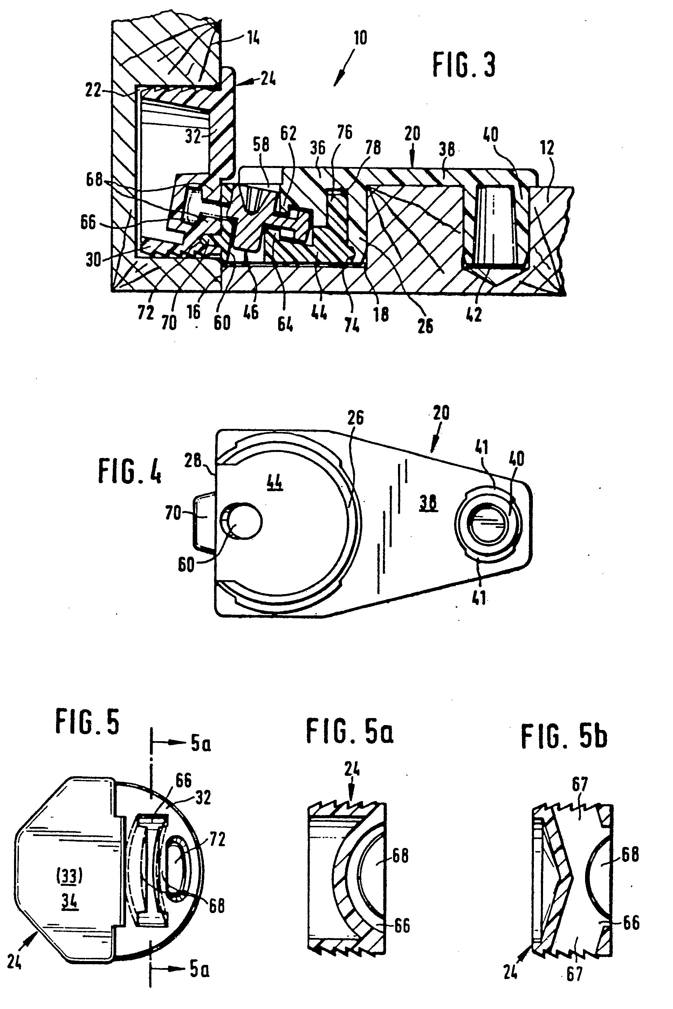

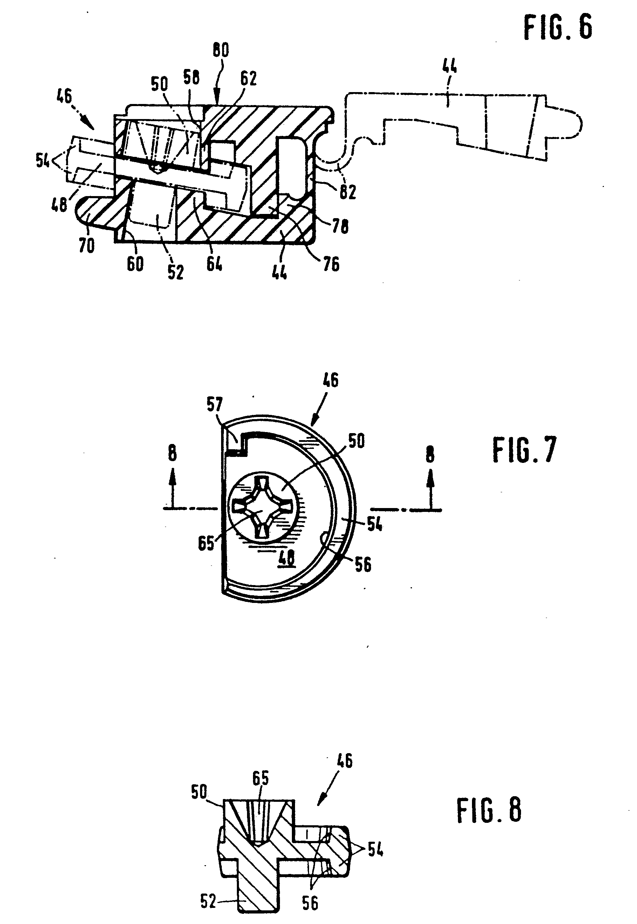

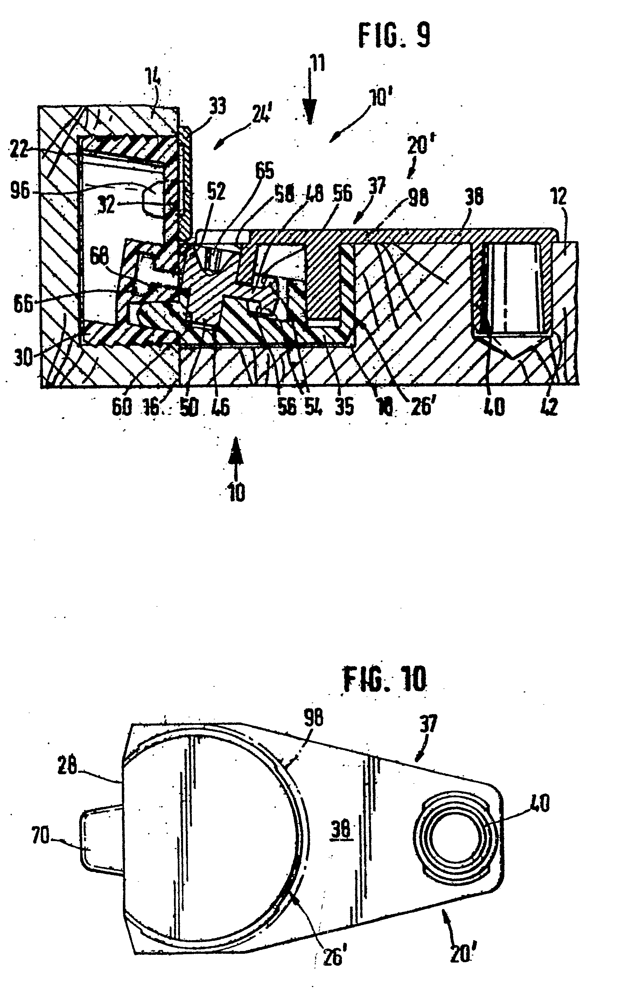

Aus Fig. 3 geht hervor, daß im Innern des Einstecktopfs 26 der in den Figuren 7 und 8 zusätzlich gesondert dargestellte Drehkeil 46 drehbar gelagert ist, und zwar besteht dieser vorzugsweise im Druckgußverfahren aus Metall hergestellte Drehkeil aus einem schiebenförmigen und über etwas mehr als 180° kreisförmig und im restlichen Teil geradlinig begrenzten Basisteil 48, von dem an der Ober- und Unterseite je ein Lagerzapfen 50 bzw. 52 vorspringt. Im kreisförmig begrenzten Randbereich des Basisteils 48 springt nach entgegengesetzten Richtungen eine den Verriegelungskeil bildende Randleiste 54 vor, deren in Richtung parallel zur Flachseite des Basisteils gemessene Dicke von einem zum anderen Ende allmählich zunimmt, so daß ihre den Lagerzapfen zugewandten Flächen also schneckenförmig verlaufende Verriegelungsflächen 56 bilden. Am dickeren Keilende weist der Verriegelungskeil 54 einen ein kurzes Stück radial einwärts gerichteten Endanschlag 57 auf, der beim Ansetzen des Beschlagteils 20 am Beschlagteil 24 an der Außenfläche des letztgenannten zweiten Beschlagteile zur Anlage kommt, wobei der Drehkeil 56 in seine Ausgangslage gestellt wird.

Die Lagerzapfen 50 und 52 des Drehkeils 46 sind in der in Fig. 3 erkennbaren leicht schräg geneigten Lage in Lageraufnahmen im Einsteckstopf 26 bzw. im Deckelteil 44 drehbar gelagert. Diese Lageraufnahmen werden von durchgehenden Bohrungen 58 bzw. 60 im Boden 56 bzw. im Deckelteil 44 gebildet, wobei die Bohrungen zur Erzielung einer auch für die Übertragung hoher Spannkräfte hinreichenden Lagerfläche in Ansätzen 62 bzw. 64 vorgesehen sind, die vom Boden 36 des Einstecktopfs 26 bzw. dem Deckelteil 44 jeweils um ein solches Maß in Richtung aufeinander zu vorspringen, daß der zwischen ihm verbleibende Spalt gerade etwa die Dicke des scheibenförmigen Basisteils 48 des Drehkeils 46 hat. In der in der offenen Bohrung 58 zugänglichen Stirnfläche des Lagerzapfens 50 ist eine Werkzeug-Ansetzausnehmung 65 in Form eines Kreuzschlitzes vorgesehen, in welche die Schneide eines Kreuzschlitz-Schraubenzierhers eingeführt werden kann, mit dem der Drehkeil dann aus der in Fig. 3 voll ausgezogenen Stellung in die strichpunktiert dargestellte Verriegelungsstellung verdreht werden kann. In dieser verriegelten Stellung greift die den Verriegelungskeil bildende Randleiste 54 in eine langgestreckte Ausnehmung 66 im Boden 32 des zweiten Beschlagteils 24 (siehe auch Fig. 5). Von den gegenüberliegenden Seitenflächen der Ausnehmung 66 springt je ein Riegelvorsprung 68 in Richtung auf die jeweils andere Seitenfläche vor, deren Höhe so bemessen ist, daß zwischen ihnen ein etwa der Dicke des scheibenförmigen Basisteils 48 des Drehriegels 46 entsprechender Spalt verbleibt. Die ins Innere der Ausnehmung 66 gerichteten Rückseiten der Riegelvorsprünge 68 sind durch kreisbogenförmig begrenzte Flächen gebildet, deren Radius etwa dem Radius der Verriegelungsflächen 56 des Drehkeils 46 entspricht, wobei die Riegelvorsprünge 68 entsprechend der Versetzung der Verriegelungsflächen 56 relativ zum Umfang des Drehriegels 46 zur Mitte des zweiten Beschlagteils 24 exzentrisch versetzt sind. Zum Verbinden der beiden in korrekt ausgerichtete Anlage gebrachten Beschlagteile 20 und 24 braucht also nur der Drehriegel 46 aus der in Fig. 3 ausgezogen dargestellten Ausgangslage im Uhrzeigersinn gedreht werden. Das in Fig. 7 unten liegende dünnere Vorderende des Verriegelungskeils 56 schwenkt dann in die Ausnehmung 66 im zweiten Beachlagteil und seine Verriegelungsflächen 56 greifen hinter die Riegelvorsprünge 68, wie dies in Fig. 3 in strichpunktierten Linien angedeutet ist. Durch den bezogen auf die Drehachse des Drekeils 46 schneckenförmigen Verl auf der Verriegelungsflächen 56 wird mit zunehmender Drehung des Drehkeils ein Anzug erreicht, durch den die beiden Beschlagteile mit hoher Kraft miteinander verspannt werden.

Die Ausnehmung 66 erstreckt sich, wie in Fig. 5 erkennbar ist, nur über einen Teil der Breite des Bodens 32. Die zwischen den Enden der Ausnehmung und dem Umfang des Bodens verbleibenden stegartigen Flächenbereiche des Bodens wirken einer Aufweitung der Ausnehmung 66 derart, daß ihre Seitenflächen und damit die Riegelvorsprünge 68 keilartig voneinander weggedrängt werden, entgegen.

Besonders widerstandsfähig gegen die erwähnte keilartige Aufweitung der Ausnehmung 66 wird der zweite Beschalgteil 24 dann, wenn dessen Umfangswandung in der in Fig. 5a gezeigten Weise seitlich völlig geschlossen ist.

Alternativ kann die Umfangswandung aber auch entsprechend der Fig. 5b seitliche Durchbrüche 67 haben, wobei dann die konstruktive Ausbildung der Spritzgußform für den Beschlagteil 24 insofern vereinfacht wird, als die Anordnung von seitlich durch diese Durchbrüche 67 herausziehbaren Formenschiebern zur Erzeugung der hinterschnittenen Flächen der Riegelvorsprünge 68 möglich wird, Werkzeugtechnisch lösbar ist aber — was ausdrücklich festgehalten werden soll — auch die Herstellung des Beschlagteils mit der in Fig. 5a gezeigten Ausnehmung.

Um die korrekte Ausrichtung der beiden Beschlagteile 20 und 24 vor ihrer Verspannung mittels des Drehkeils 46 zu gewährleisten, weist der erste Beschlagteil 20 an seiner Abflachung 28 eine in Richtung auf den zweiten Beschlagteil vorstehenden Vorsprung 70 auf, dem im zweiten Beschlagteil 24 unterhalb der Ausnehmung 66 eine komplementär geformte Ausnehmung 72 zugeordnet ist. Durch die komplementäre Form des Vorsprungs 70 und der Ausnehmung 72 wird gewährleistet, daß die beiden Beschlagteile beim Ansetzen aneinander zwangsläufig so ausgerichtet werden, daß der Drehkeil 46 der Ausnehmung 66 genau gegenübersteht.

Der Vorsprung 70 des Beschlagteils 20 ist dabei am Deckelteil 44 vorgesehen, der den Einstecktopf 26 des Beschlagteils 20 an der Unterseite abschließt. Dieser beim Ausführungsbeispiel nach den Figuren 1 bis 4 also gesonderter Beauteil hergestellte Deckelteil 44 ist, wie in Fig. 4 erkennbar ist, in eine im Bereich des unteren Randes des Einstecktopfes 26 in dessen Innenfläche vorgesehene Umfangsnut 74 eingerastet. Da der Deckelteil 44 den unteren Lagerzapfen 52 des Drehkeils 46 aufnimmt, wird ein Teil der beim Anziehen des Drehkeils erzeugten Spannkraft auf ihn übertragen. Um zu verhindern, daß dieser Anteil der Spannkraft den Deckelteil 44 aus der Umfangsnut 74 in Richtung zur Abflachung 28 herauszieht, ist auf der der Abflachung 28 abgewandten Seite ein ins Topfinnere vorspringender Wandabschnitt 76 vorgesehen, der in eine zugeordnete komplementäre Ausnehmung 78 im Topfinnern eingreift. In Richtung der Spannkraft ist der Deckelteil 44 als zusätzlich formschlüssig im Einstecktopf 26 gehalten.

In Richtung zum Boden der Ausnehmung 18 ist der Deckelteil 44 dagegen nur durch die erwähnte Rastung in der Umfangsnut 74 gehalten. Wenn diese Ausnehmung 18 nun versehentlich etwas tiefer als der in die Ansnehmung eingreifende Einstecktopf 26 des ersten Beschlagteils 20 ist und senkrechter Druck auf die Wand 14 einwirkt, könnte der mit dem Vorsprung 70 ja in die Ausnehmung 72 des zweiten Beschlagteils 24 eingreifende Deckelteil 44 aus dem Beschlagteil herausgedrückt werden. Dies wird jedoch durch die untere Begrenzungskante des von der Wand 14 vorstehenden Bereichs 34 verhindert, die so ausgebildet und angeordnet ist, daß sie sich in der bestimmungsgemäßen Verbindungslage der beiden Beschlagteile auf der Oberseite des Beschlagteils 20 abstützt.

Fig. 6 zeigt eine mit 80 bezeichnete abgewandelte Ausführungsform des ersten Beschlagteils. Der Beschlagteil 80 entspricht dem Beschlagteil 20 bezüglich der Anordnung des Drehkeils und des Zusammenwirkens mit dem zweiten Beschlagteil 24 weitgehend. Da mit dem Beschlagteil 28 übereinstimmende Teile des Beschlagteils 80 mit gleichen Bezugszeichen versehen sind, genügt es, bezüglich der übereinstimmenden Ausgestaltung auf die Beschreibung zum Beschlagteile 20 zu verweisen und nachstehend nur kurz die Unterschiede darzustellen. Der langgestreckte Auflageflansch 38 mit dem zusätzlichen Befestigungszapfen 40 des Beschlagteils 20 entfällt beim Beschlagteil 80, das dementsprechend kleiner und unauffälliger ist und praktisch nur noch aus dem durch den Deckelteil 44 verschlossenen Einstecktopf 26 besteht. Im Unterschied zum Beschlagteil 20 hängt der Deckelteil 44 aber einstückig mit dem Einstecktopf 26 zusammen, d.h. der gesamte Beschlagteil 80 mit Ausnahme des Drehkeils 46 ist einstückig aus Kunststoff gespritzt, und zwar ist die zugehörige Spritzgußform so ausgebildet, daß der Deckelteil in der in der Zeichnungsfigur strichpunktiert dargestellten Lage erzeugt wird, in welcher er über einen dünnen, elastisch verformbaren Wandabschnitt 82 mit dem im Bereich dieses Wandabschnitts unterbrochenen Einstecktopf 26 zusammenhängt. Der Wandabschnitt 82 wirkt also wie ein Filmscharnier und erlaubt es den Deckelteil 44 aus der strichpunktierten Lage in die ausgezogen dargestellte bestimmungsgemäße Lage zu verschwenken und mit dem Einstecktopf 26 zu verrasten.

Der Beschlagteil 80 ist wegen des Fehlens des zusätzlichen Befestigungszapfens 40 nicht im gleichen Maße belastbar wie der Beschlagteil 20, übertrifft jedoch Beschlagteile ähnlicher bekannter Verbindungsbeschläge noch erheblich.

In den Figuren 9 bis 12 ist ein weiterers in seiner Gesamtheit mit 10' bezeichnetes Ausführungsbeispiel ders erfindungsgemäßen Verbindungsbeschlages gezeigt, von dem nachstehend wiederum nur die gegenüber den bereits beschriebenen Ausführungsbeispielen getroffenen Abänderungen beschrieben werden, während bezüglich der mit den vorausgehenden Ausführungsbeispielen übereinstimmenden und mit gleichen Bezugszeichen versehenen Teile und Funktionen zur Vermeidung von Wiederholungen auf die vorstehende Beschreibung Bezug genommen wird.

Der zweite Beschlagteil 24' des Verbindungsbeschlages 10' unterscheidet sich vom zuvor beschriebenen Beschalgteil 24 nur dadurch, daß sein Boden bündig mit der Oberfläche der Seitenwand 14 abschließt. Der beim Beschlagteil 24 des Verbindungsbeschlages 10 einstückig am Einstecktopf angesetzte, über die Innenfläche der Seitenwand 14 und radial über die Außenfläche der Umfangswand des Einstecktopfs 30 vorstehende Bereich 34 ist beim Beschlagteil 24' durch eine gesonderte, auf dem Boden 32 aufgesetzte Platte 33 (Fig. 9) aus Metall ersetzt, welche einerseits eine dekorative Abdeckung für den Beschlagteil bildet und im überstehenden Bereich mit ihrer der Seitenwand zugekehrten Unterseite wiederum einen sich beim Einpressen oder Einschlagen in die Ausnehmung 22 auf der Innenfläche der Seitenwand 14 aufsetzenden Tiefenanschlag bildet.

Einen in der Funktion entsprechenden Tiefenanschlag weist auch der in diesem Fall jedoch mit seinem geschlossenen Boden 35 im Innern der Ausnehmung 18, d.h. umgekehrt zum Einstecktopf 26 des Beschlagteils liegende Einstecktopf 26' des ersten Beschlagteils 20' auf, in dem in seine etwa in Höhe der Innenseite des Schrankbodens 12 liegende offene Mündung ein ebenfalls im Druckgußverfahren aus Zink (Zamak) hergestellter metallischer Deckelteil 37 eingerastet ist, der mit Ausnahme dieses Bereichs der Abflachung 28 zu einem radial vorstehenden Auflageflansch 38 vergrößert ist, dessen Unterseite den erwähnten Tiefenanschlag bildet. Der auf der der Abflachung 28 gegenüberliegenden Seite um ein erhebliches Maß vergrößerter Auflageflansch 38 ist in einigem Abstand vom Einstecktopf an seiner Unterseite mit einem zusätzlichen Befestigungszapfen 40 vorgesehen, der in eine Bohrung 42 des Schrankbodens 12 eingreift und den Beschlagteil 20 in Längsrichtung ausrichtet und zusätzlich festlegt. Die Befestigung der metallischen Platte 33 auf dem zweiten Beschlagteil 24' erfolgt durch ein oder mehrere von ihrer Unterseite vorspringende und in Öffnungen im Boden 32 einrastbare Vorsprünge 96, die in Fig. 9 schematisch dargestellt sind.

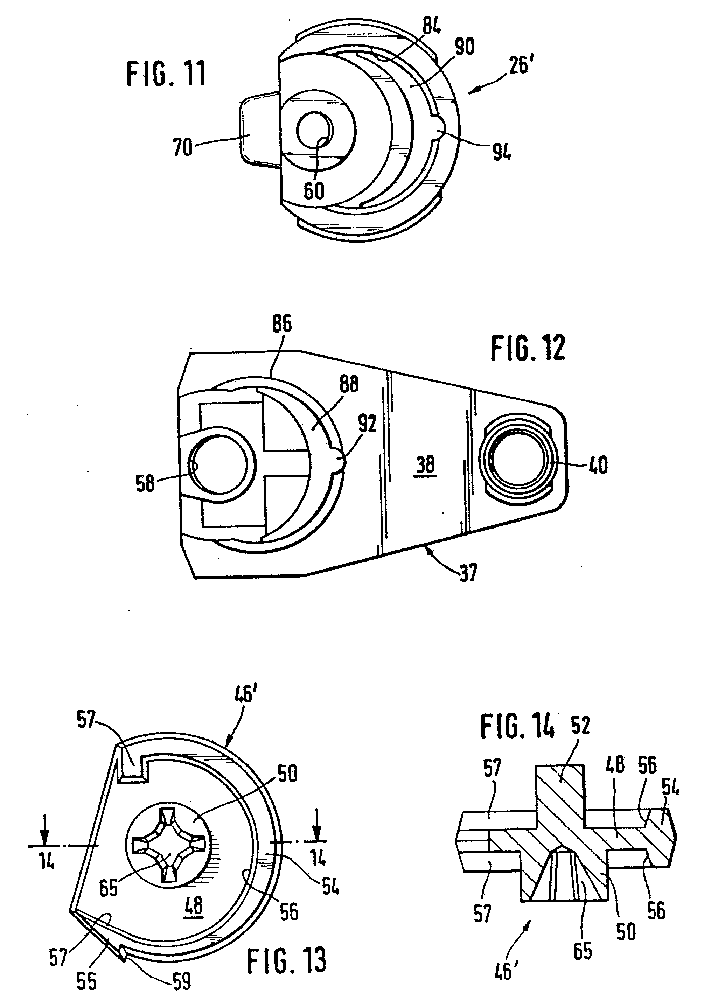

In den Figuren 11 und 12 sind der Einstecktopf 26' und der Deckelteil 37 getrennt voneinander dargestellt, um die Art und Weise der Verbindung dieser beiden Teile zum Beschlagteil 20' zu veranschaulichen. Der Deckelteil 37 ist in die offene Mündung des Einstecktopfs 26' eingerastet, wofür er an seiner Unterseite einen in eine etwas hinterschnittene Umfangsnut 84 in der Mündung des Einstecktopfs einrastbaren Ringflansch 86 (Fig. 12) aufweist. Zur Aufnahme der Riegel-Spannkraft springt zusätzlich auf der der Abflachung 28 gegenüberliegenden Seite ein in der Draufsicht etwa sichelförmiger Wandabschnitt 88 bis in unmittelbare Nähe des Bodens des Einstecktopfs 26' vor und greift dabei in eine komplementäre Ausnehmung 90 (Fig. 11) im Einstecktopf ein. An der der Abflachung 28 abgewandten Rückseite des Wandabschnitts 88 ist eine Rippe 92 angeformt, die in eine entsprechende Längsnut 94 in der Wandung der Ausnehmung 90 eingreift, wodurch gewährleistet ist, daß der Deckelteil nur in korrekt ausgerichteter Drehlage relativ zum Einstecktopf in diesen einrastbar ist.

In Fällen geringerer Beanspruchungen, in denen eine zusätzliche Festlegung des Beschlagteils 20' mittels des Befestigungszapfens 40 nicht erforderlich ist, kann der Auflageflansch 38 auch entfallen, so daß der Deckelteil dann in seinem von der Abflachung 28 wegweisenden Bereich in der durch die strichpunktierte Linie 98 in den Figuren 9 und 10 veranschaulichten Weise begrenzt ist.

In den Figuren 13 und 14 ist schließlich noch eine mit 46' bezeichnete Weiterbildung eines im erfindungsgemäßen Verbindungsbeschlag verwendbaren Drehkeils dargestellt, die sich vom Drehkeil 46 nur dadurch unterscheidet, daß am Vorderende der den Verriegelungskeil bildenden Randleiste 54 eine einen Fangabschnitt bildende Verlängerung 55 angesetzt ist, die in der Ausgangs- oder Ansetzstellung des Drehkeils 46' von der Abflachung 28 des ersten Beschlagteils 20 vorsteht und einen vor der Verriegelung mit dem zweiten Beschlagteil 24 eventuell noch bestehenden Anfangsspalt überbrückt. Die Verlängerung 55 ist so ausgebildet, daß ihre die Fortsetzung der Verriegelungsflächen 56 bildenden Fangflächen 57 etwa tangential an die Verriegelungsflächen 56 anschließen. Die am vorderen Ende zugespitzte Verlängerung 55 verdickt sich an ihrer Außenseite keilförmig bis zur Anschlußstelle an den eigentlichen Verriegelungskeil, so daß dort eine einen Anschlag bildende Stufenfläche 59 entsteht, die ein Zurückdrehen der Verlängerung ins Innere des Beschlagteils 20 verhindert. Es ist klar, daß die Tatsache, daß die den Fangabschnitt bildende Verlängerung 55 einen etwas größeren Durchmesser als der restliche Verriegelungskeil hat, dann natürlich im Topfteil 26 bzw. 26' dadurch berücksichtigt werden muß, daß dessen Innenwandung in dem Bereich, in welchen die Verlängerung 55 des Drehriegels 46' beim Verriegelungsvorgang wieder in den Topfteil eintritt, in Form einer bogenförmigen Nut ausgenommen wird. Um zu verhindern, daß diese Nut die Mantelwandung des Einstecktopfs 26 bzw. 26' in zu starkem Maße schwächt, kann es zweckmäßig sein, die Drehachse des Drehkeils und damit auch die den Drehkeil aufnehmende Ausnehmung im Einstecktopf sowie die Lageraufnahmen 58 und 60 für den Drehkeil um etwa das halbe Maß des Durchmesserunterschiedes des Normaldurchmessers des Riegelelements und des Außendurchmessers der Verlängerung 55 aus der Längsmittelebene des Beschlagteils zu desaxieren, und zwar bezogen auf Fig. 4, 10 und 12 über und bezogen auf Fig. 11 unter die horizontal verlaufende Längsmittelebene.

Im Rahmen des Erfindungsgedankens sind Abwandlungen und Weiterbildungen der beschriebenen Ausführungsbeispiele verwirklichbar. So kann beispielsweise der Drehkeil auch mit senkrechter, d.h. mit der Mittelachse des Topfteils 28 bzw. 26' zusammenfallender oder zu ihr paralleler Drehachse angeordnet werden. Weiter ist es möglich, den Tiefenanschlag des zweiten Beschlagteils 24' des in Verbindung mit den Figuren 9 bis 12 beschriebenen Verbindungsbeschlages 10' ähnlich wie bei den zuvor beschriebenen Beschlagteilen 24 durch einen einstückig angespritzten und radial über den Außenumfang des Einstecktopfs 30 vorstehenden Rand zu verwirklichen. Die metallische Platte 33 hat dann lediglich noch die Aufgabe einer dekorativen Abdeckung des Beschlagteils 24'.

## Patentansprüche

1. Verbindungbeschlag (10; 10') zum Verbinden von vorzugsweise rechtwinklig zusammentreffenden plattenförmigen Möbelteilen (12; 14), bestehend aus zwei als im wesentlichen zylindrische Einstecktöpfe ausgebildeten Beschlagteilen (20, 24; 20', 24'; 80), die jeweils versenkt in an einer Flachseite der zu verbindenden Möbelteile (12; 14) offen mündende komplementäre Ausnehmungen (18; 22) einsetz- bzw. einschlagbar sind, und von denen der erste Beschlagteil (20; 20'; 80) einen von einer in den Beschlagteil zurückgedrehten Ansetzlage aus in eine aus der Stirnkante (16) des zugehörigen Möbelteils vortretende Verriegelungslage verdrehbaren Drehkeil (46; 46') mit schneckenförmigem Verriegelungskeil aufweist, der von einer über mehr als 180° vom Randbereich eines mit den Lagerzapfen (50; 52) zur Lagerung im zugehörigen Beschlagteil (20; 20'; 80) versehenen scheibenförmigen Basisteils (48) in entgegengesetzte Richtung vorstehenden Randleiste (54) gebildet ist, deren auf gegenüberliegenden Seiten des Basisteils (48) liegende, den Lagerzapfen (50; 52) zugewandte schneckenförmig verlaufende Verriegelungsflächen (56) in bestimmungsgemäßer Verbindungsstellung hinter die Innenflächen von von zwei entgegengesetzten Seitenflächen einer langgestreckten Ausnehmung (66) im zweiten Beschlagteil (24; 24') vorstehenden Riegelvorsprüngen (68) greifen, wobei die den mit dem Drehkeil (46; 46') versehenen ersten Beschlagteil aufnehmende Ausnehmung (18) für den Durchtritt des Drehkeils zur schmalen Stirnkante (16) des zugehörigen Möbelteils (12) hin durchbrochen und der Beschlagteil (20; 20'; 80) an seiner diesem Durchbruch zugeordneten Seite derart abgeflacht ist, daß die für den Durchtritt des Drehkeils (46; 46') offene Abflachung in bestimmungsgemäßer Montagelage etwa bündig zur durchbrochenen Stirnkante (16) des Möbelteils (12) verläuft, dadurch gekennzeichnet, daß der mit dem Drehkeil (46; 46') versehene erste Beschlagteil (20; 20'; 80) aus einem Topfteil (26; 26') mit einem Boden (36) und einer bis auf den Bereich der Abflachung (28) zylindrischen Umfangswand und einem in die offene Topfseite eingesetzten Deckelteil (44; 37) zusammengesetzt ist, wobei die Lageraufnahmen für die Lagerzapfen (50; 52) des Drehkeils (46; 46') im Boden (36) und im Deckelteil (44; 37) vorgesehen sind.

2. Verbindungsbeschlag nach Anspruch 1, bei dem der Deckelteil (44) des den Drehkeil (46) enthaltenen ersten Beschlagteils im Innern und sein Boden (36) an der Mündung der Ausnehmung (18) des zugehörigen Möbelteils liegt, dadurch gekennzeichnet, daß der Boden (36) zumindest in einem Teilbereich über die Außenfläche der Umfangswand radial vorsteht und so einen Tiefenanschlag für das Einpressen oder Einschlagen des Beschlagteils (20; 80) in die Ausnehmung (18) des zugehörigen Möbelteils (12) bildet.

3. Verbindungsbeschlag nach Anspruch 2, dadurch gekennzeichnet, daß der radial vorstehende Bereich des Bodens (36) auf der der Abflachung (28) gegenüberliegenden Seite zu einem großflächigen Auflageflansch (38) vergrößert ist, von dessen dem Möbelteil (12) zugewandter Unterseite mit Abstand von der Umfangswand des Topfteils (26) ein zusätzlich in einer Bohrung (42) im Möbelteil (12) verankerbarer Befestigungszapfen (40) vorspringt.

4. Verbindungsbeschlag nach einem der Ansprüche 1 bis 3, dadurch gekennzeichnet, daß der Deckelteil (44) mit seinem Rand in eine im Bereich des offenen Endes der Umfangswand des Topfteils (26) in deren Innenfläche vorgesehene Umfangsnut (74) bündig einrastbar ist, und daß der Deckelteil (44) auf der der Abflachung (28) abgewandten Seite wenigstens einen ins Topfinnere vorspringenden Wandabschnitt (76) aufweist, der in eine im Topfinnern gebildete komplementäre Ausnehmung (78) eingreift.

5. Verbindungsbeschlag nach einem der Ansprüche 1, 2 oder 4, dadurch gekennzeichnet, daß der Deckelteil (44) des ersten Beschlagteils (80) über ein Filmscharnier (82) einstückig mit dem Topfteil (26) zusammenhängend hergestellt ist.

6. Verbindungsbeschlag nach einem der Ansprüche 1 bis 5, dadurch gekennzeichnet, daß der Deckelteil (44) im Bereich der Abflachung (28) des den Drehkeil (46) aufnehmenden ersten Beschlagteils (20; 80) einen in Richtung auf den zweiten Beschlagteil (24) vorstehenden Vorsprung (70) aufweist, und daß im zweiten Beschlagteil (24) eine den Vorsprung (70) in der Verbindungsstellung der beiden Beschlagteile (20; 80; 24) aufnehmende komplementäre Ausnehmung (72) vorgesehen ist.

7. Verbindungsbeschlag nach einem der Ansprüche 1 bis 6, dadurch gekennzeichnet, daß die Lageraufnahmen für den Drehkeil (46) von Bohrungen (58; 60) in vom Boden (36) in Richtung zum Deckelteil (44) und vom Deckelteil (44) in Richtung zum Boden (36) vorspringenden einstückig mit dem Boden bzw. dem Deckelteil hergestellten Ansätzen (62; 64) gebildet sind, wobei wenigstens die bodenseitige Bohrung (58) den Ansatz (62) und den Boden (36) ganz durchsetzt, so daß die in der bodenseitigen Bohrung (58) liegende, mit einer Werkzeug-Ansetzausnehmung (65) versehene Stirnfläche des Lagerzapfens (50) des Drehkeils (46) zum Ansetzen eines Drehwerkzeugs zugänglich ist.

8. Verbindungsbeschlag nach Anspruch 7, dadurch gekennzeichnet, daß die mit den Lageraufnahmen versehenen Ansätze (62, 64) um ein solches Maß vom Boden (36) bzw. Deckelteil (44) vorspringen, daß der zwischen ihnen verbleibende Spalt etwa der Dicke des scheibenförmigen Basisteils (48) des Drehkeils (46) entspricht.

9. Verbindungsbeschlag nach einem der Ansprüche 1 bis 8, dadurch gekennzeichnet, daß die Drehachse des Drehkeils (46) in der Längsmittelebene des zugehörigen Beschlagteils (20; 80) liegt und sie zur Mittelachse des Topfteils (26) derart leicht schräg geneigt ist, daß ihr bodenseitiges Ende größeren Abstand zum zweiten Beschlagteil (24) hat, als ihr deckelseitiges Ende.

10. Verbindungsbeschlag nach Anspruch 1, dadurch gekennzeichnet, daß der Boden des Topfteils (26') im Innern der Ausnehmung (18) des zugehörigen Möbelteils (12) liegt, während der im Bereich der Mündung der Ausnehmung (18) liegende Deckelteil (37) aus Metall hergestellt ist und zumindest in einem Teilbereich über die Außenfläche der Umfangswand des Topfteils (26') radial vorsteht und so gleichzeitig einen Tiefenanschlag für das Einpressen oder Einschlagen des Einstecktopfs (26') in die Ausnehmung des zugehörigen Möbelteils (12) bildet.

11. Verbindungsbeschlag nach Anspruch 10, dadurch gekennzeichnet, daß der Deckelteil (37) in eine Umfangsnut (84) in der offenen Seite des Topfteils (26') eingerastet ist und zusätzlich einen ins Innere des Topfteils (26') vorspringenden Wandabschnitt (88) aufweist, der in eine zugeordnete komplementäre Ausnehmung (90) im Topfinnern eingreift.

12. Verbindungsbeschlag nach Anspruch 11, dadurch gekennzeichnet, daß der ins Innere des Topfteils (26') vorspringende Wandabschnitt (88) des Deckelteils (37) auf der der Abflachung (28) gegenüberliegenden Seite ins Topfinnere eingreift.

13. Verbindungsbeschlag nach einem der Ansprüche 1 bis 12, dadurch gekennzeichnet, daß der zweite Beschlagteil (24; 24') als Einstecktopf (30) mit zur Mündung der Ausnehmung (22) im zugehörigen Möbelteil (14) weisendem Boden (32) und einstückig angesetzter zylindrischer Umfangswand ausgebildet ist, und daß die mit Riegelvorsprüngen (68) versehene Ausnehmung (66) im Boden (32) vorgesehen ist.

14. Verbindungsbeschlag nach Anspruch 13, dadurch gekennzeichnet, daß die Umfangswand des zweiten Beschlagteils (24; 24') durch wenigstens zwei zueinander winkelversetzte, gegenüberliegende Bereiche der Innenfläche der Umfangswand diagonal verbindende Stützwände gegen radiale Zusammendrückung versteift ist.

15. Verbindungsbeschlag nach Anspruch 13 oder 14, dadurch gekennzeichnet, daß die langgestreckte Ausnehmung (66) im Boden (32) des zweiten Beschlagteils (24; 24') nur über einen Teil der Gesamtbreite des Bodens (32) geführt ist.

16. Verbindungsbeschlag nach einem der Ansprüche 13 bis 15, dadurch gekennzeichnet, daß der Boden (32) des zweiten Beschlagteils (24) in dem außerhalb seiner Anlage an der Abflachung (28) des ersten Beschlagteils (20; 80) liegenden Bereich (34) an der Außenseite etwas dicker als im Anlagebereich ist und über die Außenfläche der Umfangswand vorsteht und so einen Tiefenanschlag für das Einpressen oder Einschlagen des Beschlagteils (24) in die Ausnehmung (22) des zugehörigen Möbelteils (14) bildet.

17. Verbindungsbeschlag nach einem der Ansprüche 10 bis 15, dadurch gekennzeichnet, daß der außerhalb der Anlage der Abflachung (28) des ersten Beschlagteils (20') liegende sichtbare Bereich des Topfteils (30) des zweiten Beschlagteils (24') mit einer metallischen Platte (33) abgedeckt ist, die über die Außenfläche der Umfangswand des Topfteils (30) vorspringt und so einen Tiefenanschlag für das Einpressen oder Einschlagen des zweiten Beschlagteils (24') in die Ausnehmung (22) des zugehörigen Möbelteils (14) bildet.

18. Verbindungsbeschlag nach Anspruch 17, dadurch gekennzeichnet, daß die metallische Platte (33) an ihrer dem Topfteil (30) zugewandten Flachseite wenigstens einem Vorsprung (96) aufweist, der in eine passende Öffnung im Boden (32) des Topfteils (30) einrastbar ist.

19. Verbindungsbeschlag nach einem der Ansprüche 1, 2 und 7 bis 9, dadurch gekennzeichnet, daß die Randleiste (54) des Drehkeils (46') an ihrem zu Beginn des Verriegelungsvorgangs zuerst mit mit den Riegelvorsprüngen (68) des zweiten Beschlagteils (24; 24') in Eingriff kommenden Vorderende einen in ganz zurückgedrehter Ansetzlage von der Abflachung (28) des ersten Beschlagteils (20; 20') vorstehende Verlängerung (55) aufweist, die als Fangabschnitt wirkt und einen zu Beginn des Verriegelungsvorgangs gegebenenfalls noch bestehenden Spalt zwischen den Beschlagteilen (20, 20'; 24, 24') überbrückt.

20. Verbindungsbeschlag nach Anspruch 19, dadurch gekennzeichnet, daß die die schraubenförmig verlaufenden Verriegelungsflächen (56) verlängernden, den Lagerzapfen (50; 52) zugewandten Fangflächen (57) der Verlängerung (55) der Randleiste (54) etwa tangential an die Verriegelungsflächen (56) anschließen.

21. Verbindungsbeschlag nach Anspruch 19 oder 20, dadurch gekennzeichnet, daß die Verlängerung (55) an der Anschlußstelle an der den eigentlichen Verriegelungskeil bildenden Randleiste (54) stufenartig auf einen etwas größeren Außendurchmesser verdickt ist, wobei die vom Durchmessersprung gebildete Stufenfläche (59) einen in der Ansetzlage des Verbindungsbeschlages am ersten Beschlagteil (20; 20') anliegenden Anschlag bildet, der ein Zurückdrehen der Verlängerung (55) ins Innere des Beschlagteils (20; 20') verhindert.

## Claims

1. Joining device (10, 10') for joining board-like furniture parts (12, 14) meeting preferably at right angles, consisting of two fittings (20, 24, 20', 24', 80) designed as essentially cylindrical insert cups and which can be respectively inserted or pounded sunkenly into a complementary mortise (18, 22) which opens at a flat side of the furniture parts (12, 14) to be connected; the first fitting part (20, 20', 80) comprising a turn wedge with a snail-shaped locking wedge which is rotatable from a starting position in which it is turned back into the fitting part into a locking position in which it protrudes from the facing edge (16) of the associated furniture part; the locking wedge being formed by a marginal rim (54) which protrudes over more than 180 degrees from the marginal portion of a disc-like base part (48) provided with the bearing pivots (50, 52) for pivoting in the associated fitting part (20, 20', 80) in opposite direction; the locking surfaces (56) of the marginal rim which are located on opposite sides of the base part (48) and extending snail-like and facing the pivots (50, 52), in the proper connecting position engaging behind the inner surfaces of locking projections (68) which protrude from two opposite lateral surfaces of a longitudinally extending recess (66) in the second fitting part (24, 24'); the mortise (18) receiving the first fitting part provided with the turn wedge (46, 46') for the passage of the turn wedge being broken through towards the narrow face edge (16) of the associated furniture part (12) and the fitting part (20, 20', 80) on its side pertaining to the break-through being flattened such that the flattened portion open for the passage of the turn wedge (46, 46') in the proper mounting position extends approximately flush with the broken-through face edge (16) of the furniture part (12), characterized in that the first fitting part (20, 20', 80) provided with the turn wedge (46, 46') is composed of a cup part (26, 26') with a bottom (36) and a circumferential wall which is cylindrical except for the flattened area (28), and a lid part (44, 37) inserted into the open side of the cup, while the bearing recesses for the pivots (50, 52) of the turn wedge (46, 46') are provided in the bottom (36) and in the lid part (44, 37).

2. Joining device according to Claim 1, in which the lid part (44) of the first fitting part containing the turn wedge (46) is located interiorly and its bottom (36) is located at the mouth of the mortise (18) of the respective furniture part, characterized in that the bottom (36) extends radially at least over a partial area beyond the outer surface of the circumferential wall and thereby forms a depth abutment for the pressing in or pounding in of the fitting part (20, 80) into the mortise (18) of the associated furniture part (12).

3. Joining device according to Claim 2, characterized in that the radially protruding area of the bottom (36) is enlarged on the side opposite the flattened area (28) to a large-surface resting flange (38) from the bottom side of which facing the furniture part (12) spaced from the circumferential wall of the cup part (26) a connecting stud (40) protrudes which is additionally anchored in a bore (42) in the furniture part (12).

4. Joining device according to any one of Claims 1 to 3, characterized in that the lid part (44) is adapted to be arrested flush with its margin in a circumferential groove (74) provided in the area of the open end of the circumferential wall of the cup part (26) in the inner surface of the latter, and that the lid part (44) on the side facing away from the flattened area (28) is provided with at least one wall section (76) protruding into the interior of the cup and engaging a complementary recess (78) formed in the cup interior.

5. Joining device according to any one of Claims 1, 2, or 4, characterized in that the lid part (44) of the first fitting part (80) is made integral in one piece with the cup part (26) by means of a film hinge (82).

6. Joining device according to any one of Claims 1 to 5, characterized in that the lid part in the vicinity of the flattened portion (28) of the first fitting part (20; 80) receiving the turn wedge (46) is provided with a protruding extension (70) and that in the second fitting part (24) a complementary recess (72) is provided for receiving the extension (70) in the connecting position of the two fitting parts (20; 80; 24).

7. Joining device according to any one of Claims 1 to 6, characterized in that the bearing recesses for the turn wedge (46) are formed by bores (58; 60) in extensions (62; 64) respectively extending from the bottom (36) in the direction towards the lid part (44) and from the lid part (44) in the direction towards the bottom (36) and being made integral respectively with the bottom and the lid part, while at least the bore (58) on the bottom side extends through the protrusion (62) and the bottom (36) so that the end face of the pivot (50) of the turn wedge (46) which is located in the bottom side bore (58) and provided with a tool-engaging recess (65) is accessible for engagement by a turning tool.

8. Joining device according to Claim 7, characterized in that the protrusions (62; 64) provided with the bearing recesses protrude from the bottom (36) and lid part (44) respectively by such an amount that the gap remaining between them corresponds approximately to the thickness of the disc-shaped base part (48) of the turn wedge (46).

9. Joining device according to any one of Claims 1 to 8, characterized in that the axis of rotation of the turn wedge (46) is located in the longitudinal central plane of the respective fitting part (20; 80) and is inclined with respect to the central axis of the cup part (26) slightly such that its bottom side end is spaced further from the second fitting part (24) than its lid-side end.

10. Joining device according to Claim 1, characterized in that the bottom of the cup part (26') is located in the interior of the mortise (18) of the associated furniture part (12), whereas the lid part (37) located in the area of the mouth of the mortise (18) is made of metal and protrudes at least in a partial area beyond the outer surface of the circumferential wall of the cup part (26') and thus simultaneously forms a depth abutment for the insert cup (26') being pressed in or pounded into the mortise of the associated furniture part (12).

11. Joining device according to Claim 10, characterized in that the lid part (37) is locked in a circumferential groove (84) in the open side of the cup part (26') and in addition, is provided with a wall section (88) protruding into the interior of the cup part (26'), said wall section engaging an associated complementary recess (90) in the interior of the cup.

12. Joining device according to Claim 11, characterized in that the wall section (88) of the lid part (37) projecting into the interior of the cup part (26') engages the interior of the cup on the side opposite the flattened area (28).

13. Joining device according to any one of Claims 1 to 12, characterized in that the second fitting part (24; 24') is designed as an insert cup (30) with a bottom (32) pointing towards the mouth of the mortise (22) in the respective furniture part (14) and with a one piece cylindrical circumferential wall, and that the recess (66) provided with the locking projections (68) is provided in the bottom (32).

14. Joining device according to Claim 13, characterized in that the circumferential wall of the second fitting part (24; 24') is reinforced against radial compression by at least two supporting walls angularly offset with respect to each other and diagonally connecting opposite areas of the inner surface of the circumferential wall.

15. Joining device according to Claim 13 or 14, characterized in that the elongated recess (66) in the bottom (32) of the second fitting part (24; 24') extends only over a portion of the total width of the bottom (32).

16. Joining device according to any one of Claims 13 to 15, characterized in that the bottom (32) of the fitting part (24) in the area (34) located outside its abutment at the flattened portion (28) of the first fitting part (20; 80) is somewhat thicker on the outside than in the abutment area and protrudes beyond the outer surface of the circumferential wall and thus forms a depth abutment for the fitting part (24) being pressed in or pounded into the mortise (22) of the associated furniture part (14).

17. Joining device according to any one of Claims 10 to 15, characterized in that the visible area of the cup part (30) of the second fitting part (24') located outside the abutment of the flattened area (28) of the first fitting part (20') is covered by a metallic plate (33) which protrudes beyond the outer surface of the circumferential wall of the cup part (30) and thus forms a depth abutment for the second fitting part (24') being pressed in or pounded into the mortise (22) of the associated furniture part (14).

18. Joining device according to Claim 17, characterized in that the metallic plate (33) is provided with at least one protrusion (96) on its flat side facing the cup part (30), which protrusion is adapted to engage with a fitting opening in the bottom (32) of the cup part (30).

19. Joining device according to any one of Claims 1, 2 and 7 to 9, characterized in that the marginal rim (54) of the turn wedge (46') is provided at its front end which at the beginning of the locking process first comes into engagement with the locking projections (68) of the second fitting part (24; 24'), with an extension (55) protruding from the flattened area (58) of the first fitting part (20; 20') in the completely turned in starting position, said projection functioning as a catching section and bridging a gap between the fitting parts (20, 20'; 24, 24') possibly existing at the beginning of the locking process.

20. Joining device according to Claim 19, characterized in that the catching surfaces (57) of the extension (55) of the marginal rim (54) which prolong the snail-like locking surfaces (56) and which face the pivot pin (50; 52), follow the locking surfaces (56) approximately tangentially.

21. Joining device according to Claim 19 or 20, characterized in that the extension (55) at the connecting point of the marginal rim (54) forming the actual locking wedge is thickened in a step-like manner to a somewhat larger outer diameter, while the step surface (59) formed by the increase in the diameter forms an abutment engaging in the starting position of the joining device at the first fitting part (20; 20') and which prevents a return rotation of the extension (55) into the interior of the fitting part (20; 20').

**Revendications**

1. Pièce d'assemblage (10; 10') pour l'assemblage d'éléments de meubles, (12; 14) en forme de plaque se recontrant de préférence à angle droit, constituée de deux éléments (20, 24; 20', 24'; 80) se présentant sous la forme de pots, cylindriques dans l'ensemble, qui s'enfoncent dans des évidements complémentaires (18; 22) débouchant sur une face des parties de meuble (12; 14) à assembler et dont le premier élément (20; 20'; 80) présente une clavette tournante (46, 46') qui peut tourner pour passer d'une position de mise en place, dans laquelle elle est rentrée en arrière dans ledit élément, à une position de verrouillage dans laquelle elle saille du bord frontal (16) de la partie de meuble correspondante et qui comporte un coin de verrouillage en spirale formée d'un rebord (54) qui saille, en directions opposées, sur plus de 180°, de la zone de bordure d'une pièce de base en forme de disque (48) pourvue des tourillons (50; 52) servant au montage dans l'élément de la pièce d'assemblage correspondant (20; 20'; 80) et dont les surfaces de verrouillage, (56), s'étendant en spirale, situées de part et d'autre de la base (48) et dirigées vers les tourillons (50, 52) s'engagent, dans la position d'assemblage prévue, derrière les faces intérieures de saillies (68) saillant de deux faces latérales opposées d'un évidement allongé (66) ménagé dans le deuxième élément (24; 24') de la pièce d'assemblage, l'évidement (18), recevant le premier élément pourvu de la clavette tournante (46; 46'), étant ouvert vers le bord frontal (16) de la partie de meuble correspondante (12) pour le passage de la clavette tournante et l'élément (20; 20'; 80) étant aplati, du côte contigu à cette ouverture, de façon telle que le plat ouvert pour le passage de la clavette tournante (46; 46'), dans le position de montage prévue, affleure à peu près le bord frontal ouvert (16) de la partie de meuble (12), caractérisée par le fait que le premier élément de la pièce d'assemblage (20; 20'; 80), pourvu de la clavette tournante, (46; 46') se compose d'un pot (26; 26') comportant un fond (36) et une paroi périphérique cylindrique, sauf dans la zone du plat (28), et d'un couvercle (44; 37) introduit dans le côté ouvert de ce pot, les logements des tourillons (50; 52) de la clavette tournante (46; 46') étant prévus dans le fond (36) et dans le couvercle (44; 37).

2. Pièce d'assemblage selon la revendication 1, dans laquelle le couvercle (44) du premier élément contenant la clavette tournante (46) se trouve à l'intérieur de l'évidement (18) de la partie de meuble correspondante et le fond (36) se trouve à l'orifice de cet évidement, caractérisée par le fait que le fond (36), au moins dans une zone partielle, dépasse radialement de la face extérieure de la paroi périphérique pour former une butée de profondeur pour l'enfoncement de l'élément de pièce d'assemblage (20; 80) dans l'évidement (18) de la partie de meuble correspondante (12).

3. Pièce d'assemblage selon la revendication 2, caractérisée par le fait que la partie du fond (36) qui dépasse radialement est agrandie du côté opposé au plat (28) par une bride d'appui (38) de grande surface, du dessous, dirigé vers la partie de meuble (12) de laquelle saille, à une certaine distance de la paroi périphérique du pot (26), un tenon de fixation (40) ancrable dans un trou (42) ménagé dans la partie de meuble (12).

4. Pièce d'assemblage selon l'une des revendications 1 à 3, caractérisée par le fait que le couvercle (44) est engageable à fleur, par son bord, dans une gorge circonférentielle (74) prévue dans la zone de l'orifice de la paroi périphérique du pot (26) dans la face intérieure de cette paroi, et qu'il présente du côté opposé au plat (28) au moins un morceau de paroi (76) saillant à l'intérieur du pot qui s'engage dans un évidement complémentaire (78) prévu à l'intérieur du pot.

5. Pièce d'assemblage selon l'une des revendications 1, 2 et 4, caractérisée par le fait que le couvercle (44) du premier élément (80) est fabriqué d'une seule pièce avec le pot (26), auquel il est attaché par une charnière (82) en forme de bande.

6. Pièce d'assemblage selon l'une des revendications 1 à 5, caractérisé par le fait que le couvercle (44), dans la zone du plat (28) du premier élément (20; 80) recevant la clavette tournante (46), présente une saillie (70) saillant vers le deuxième élément (24), et que dans ce deuxième élément (24) est prévu un évidement complémentaire (72) recevant cette saillie (70) quand les deux éléments (20; 80; 24) sont en position d'assemblage.

7. Pièce d'assemblage selon l'une des revendications 1 à 6, caractérisée par le fait que les logements de montage de la clavette tournante (46) sont formés par des trous (58; 60) prévus dans des appendices (62; 64) dont l'un fait corps avec le fond (36) et saille de celui-ci en direction du couvercle (44) et l'autre fait corps avec le couvercle et saille de celui-ci en direction du fond, au moins le trou (58) situé du côté du fond traversant complètement l'appendice (62) et le fond (36), de sorte que la face frontale du tourillon (50) de la clavette tournante (46), située dans ledit trou (58) et pourvue d'un évidement d'application d'outil (65), est accessible pour l'application d'un outil tournant.

8. Pièce d'assemblage selon la revendication 7, caractérisée par le fait que les appendices (62; 64), pourvus des logements de tourillons, saillent l'un du fond (36) et l'autre du couvercle (44) d'une quantité telle que la largeur de l'interstice subsistant entre eux soit à peu près égale à l'épaisseur de la base en forme de disque (48) de la clavette tournante (46).

9. Pièce d'assemblage selon l'une des revendications 1 à 8, caractérisée par le fait que l'axe de rotation de la clavette (46) est dans le plan médian longitudinal de l'élément de pièce d'assemblage correspondant (20; 80) et est légèrement incliné sur l'axe du pot (26) de façon que son extrémité côté fond soit plus éloignée du deuxième élément (24) de la pièce d'assemblage que son extrémité côté couvercle.

10. Pièce d'assemblage selon la revendication 1, caractérisée par le fait que le fond du pot (26') se trouve à l'intérieur de l'évidement (18) de la partie de meuble correspondante (12) tandis que le couvercle (37) situé dans la zone de l'orifice de l'évidement (18), est en métal et, au moins dans une partie, dépasse radialement de la face extérieure de la paroi périphérique du pot (26') et forme ainsi en même temps une butée de profondeur pour l'enfoncement du pot dans l'évidement de la partie de meuble correspondante (12).

11. Pièce d'assemblage selon la revendication 10, caractérisée par le fait que le couvercle (37) est engagé dans une forge circonférentielle (84) ménagée dans le côté ouvert du pot (26') et, en outre, présente un morceau de paroi (88) saillant à l'intérieur du pot qui s'engage dans un évidement complémentaire (90) prévu à l'intérieur du pot.

12. Pièce d'assemblage selon la revendication 11, caractérisée par le fait que le morceau de paroi (88) du couvercle (37) qui saille à l'intérieur du pot (26') s'engage à l'intérieur du pot du côté opposé au plat (28).

13. Pièce d'assemblage selon l'une des revendications 1 à 12, caractérisée par le fait que le deuxième élément (24; 24') de cette pièce se présente sous la forme d'un pot (30) dont le fond (32) est dirigé vers l'orifice de l'évidement (22) de la partie de meuble correspondante (14) et la paroi périphérique cylindrique fait corps avec ce fond, et que l'évidement (66) pourvu des saillies (68) est prévu dans le fond (32).

14. Pièce d'assemblage selon la revendication 13, caractérisée par le fait que la paroi périphérique du deuxième élément (24; 24') de ladite pièce est raidie contre la compression radiale par au moins deux parois de soutien décalées angulairement qui réunissent en diagonale des zones opposées de la face intérieure de la paroi périphérique.

15. Pièce d'assemblage selon l'une des revendications 13 et 14, caractérisée par le fait que l'évidement allongé (66) méagé dans le fond (32) du deuxième élément (24; 24') de cette pièce s'étend sur une partie seulement de la largeur dudit fond (32).

16. Pièce d'assemblage selon l'une des revendications 13 à 15, caractérisée par le fait que le fond (32) du deuxième élément (24) de cette pièce est un peu plus épais dans la zone (34) où il ne s'appuie pas sur le plat (28) du premier élément (20; 80), et dépasse de la face extérieure de la paroi périphérique pour former une butée de profondeur pour l'enfoncement de l'élément (24) dans l'évidement (22) de la partie de meuble correspondante (14).

17. Pièce d'assemblage selon l'une des revendications 10 à 15, caractérisée par le fait que la zone visible du pot (30) du deuxième élément (24') de cette pièce, située en dehors de l'appui du plat (28) de son premier élément (20'), est couverte par une plaque métallique (33) qui dépasse de la face extérieure de la paroi périphérique du pot (30) pour former une butée de profondeur pour l'enfoncement du deuxième élément (24') dans l'évidement (22) de la partie de meuble correspondante (14).

18. Pièce d'assemblage selon la revendication 17, caractérisée par le fait que la plaque métallique (33), sur sa face dirigée vers le pot, présente au moins une saillie (96) qui s'engage dans une ouverture du fond (32) du pot (30).

19. Pièce d'assemblage selon l'une des revendications 1, 2 et 7 à 9, caractérisée par le fait que le rebord (54) de la clavette tournante (46') présente, à son extrémité antérieure venant la première en prise avec les saillies (68) du deuxième élément (24; 24') au début du verrouillage, une rallonge (55) qui saille du plat (28) du premier élément (20; 20') en position de mise en place, complètement tournée en arrière et qui joue le rôle d'arrêtoir et enjambe l'interstice entre les éléments de la garniture (20, 20'; 24, 24') qui subsisterait au début du verrouillage.

20. Pièce d'assemblage selon la revendication 19, caractérisée par le fait que les surfaces d'arrêt (57) de la rallonge (55) du rebord (54) dirigées vers les tourillons (50; 52) et prolongeant les surfaces de verrouillage en spirale (56) se raccordent à peu près tangentiellement à ces dernières.

21. Pièce d'assemblage selon la revendication 19 ou 20, caractérisée par le fait que la rallonge (55) s'épaissit brusquement pour prendre un diamètre extérieur un peu plus grand à sa jonction au rebord (54) formant le coin de verrouillage proprement dit, le gradin (59) formé par le brusque changement de diamètre formant une butée qui, lorsque la garniture est en position de mise en place, s'appuie contre le premier élément (20; 20') et empêche la rallonge (55) de tourner en arrière pour entrer dans ledit élément (20; 20').

**FIG. 1**

**FIG. 2**

FIG. 3

FIG. 4

FIG. 5

FIG. 5a

FIG. 5b

FIG. 6

FIG. 7

FIG. 8

0 008 317

**FIG. 9**

**FIG. 10**

**FIG. 11**

84
90
26'
70
94
60

86

**FIG. 12**

88
92
58
38
40
37

46'
57
50
**FIG. 14** 52
57
48 56
54
57
65
50
48
65
54
57
56
65
57
55 59
**FIG. 13**
50
46'